# EUROPEAN PATENT SPECIFICATION

(11) **EP 1 092 134 B1**
(45) Date of publication and mention of the grant of the patent: **29.01.2003**
(21) Application number: 99923348.9
(22) Date of filing: 03.06.1999
(51) Int. Cl.: G01L 1/20, G01L 5/22, G01L 5/00, G01M 19/00, A47C 31/12, B60N 2/00, B60N 2/44

(54) **METHOD OF PRESSURE MAPPING FOR PREDICTION OF COMFORT IN AN AUTOMOTIVE SEAT**
VERFAHREN ZUR FLÄCHENHAFTEN DRUCKERFASSUNG FÜR DIE BESTIMMUNG DES KOMFORTS VON FAHRZEUGSITZEN
PROCEDE DE MAPPAGE DE PRESSION POUR PREDIRE LE CONFORT D'UN SIEGE AUTOMOBILE

(30) Priority: 03.06.1998 US 87796 P
(43) Date of publication of application: 18.04.2001
(73) Proprietor: Magna Interior Systems Inc., Aurora, Ontario L4G 7K1 (CA)
(72) Inventor: MILOSIC, Mari, C., Grosse Pointe Park, MI 48230 (US)
(74) Representative: Hössle & Kudlek
(86) International application number: CA9900509
(87) International publication number: WO99063314

(56) References cited:
- DE-A- 19 601 974
- US-A- 5 060 174
- "MEASURING SEAT COMFORT" AUTOMOTIVE ENGINEERING, vol. 101, no. 7, 1 July 1993 (1993-07-01), pages 25-30, XP000387349 ISSN: 0098-2571

## Description

### Technical Field

The subject invention relates to a method of pressure mapping for prediction of comfort in an automotive seat. In particular, the subject invention relates to a quantitative method for designing comfortable automotive seats.

### Description of the Prior Art

There are several commercial systems available for producing pressure maps. A pressure map is used by seat designers for predicting how a particular seat will react with a particular person sitting in the seat. However, since drivers and passengers come in all different sizes, shapes and weights, it is difficult for a designer to design for an "average" person. Many sample pressure maps must be reviewed by the designer to arrive at an "average" pressure map. However, this "average" is qualitative which makes repeatability of comfortable designs difficult, if not impossible.

According to the document DE-A-196 01 974, for several test persons the output signals of a mat with an array of resistive elements placed on the automotive seat are read out and normalized with respect to predetermined reference values. The normalized pressure values are weighted with respective factors depending on their deviation with respect to the according reference value. Thereafter, the weighted values are added. The comfort test is conducted with persons of different sizes and an average of all the results can be used as a rating number for pressure comfort.

According to the document US-A-5 060 174, the single pressure data of a test seat is compared with a data base of prior measurements and evaluations.

According to the document "MEASURING SEAT COMFORT", AUTOMOTIVE ENGINEERING, vol. 101, no. 7, 01.07.1993, pages 25-30, a seat pressure distribution is correlated with electromyograph (EMG) data, representing muscle-activity, in order to establish seat comfort.

The disadvantages of the prior art may be overcome by providing a quantitative method of pressure mapping for prediction of comfort in an automotive seat.

### Summary of the Invention

A method of mapping pressure on an automotive seat for prediction of seat comfort. The method comprises the steps of measuring a first array of pressure point values exerted on the seat to define a first pressure map and measuring a second array of pressure point values exerted on the seat, different from the first array, to define a second pressure map. The first and second pressure maps are stored as data in a storage memory device. The data is then normalized with predetermined threshold values of a reference pressure map. The normalized data from each the pressure maps is averaged to generate data of a single averaged pressure map. Finally, the method includes comparing the data from the averaged pressure map to the data from the reference pressure map and generating a rating of seat comfort based on the ratio difference between the data of the averaged pressure map and the data of the reference pressure map to thereby quantify the comfort of the seat.

### Brief Description of the Drawings

Other advantages of the present invention will be readily appreciated as the same becomes better understood by reference to the following detailed description when considered in connection with the accompanying drawings wherein:
Figure 1 is a flowchart illustrating the method of the present invention;
Figure 2 is a topographical output of the present invention for a sample seat cushion;
Figure 3 is a topographical output of the present invention for a sample ischial region;
Figure 4 is a topographical output of the present invention for a sample seat back; and
Figure 5 is a topographical output of the present invention for a sample spinal region.

### Detailed Description of the Preferred Embodiment

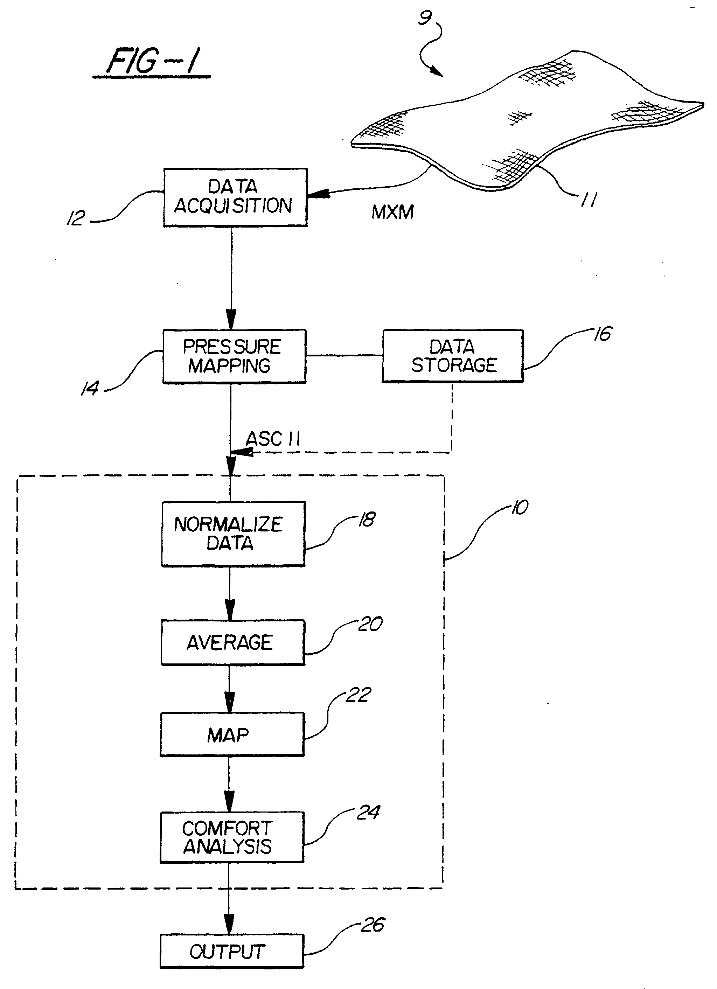

The method 10 of the present invention is illustrated in the flowchart of Figure 1. The method is preferably enabled through a C++ computer code and operated on a personal computer. The personal computer is connected to a pressure mapping system. Pressure mapping systems are commercially available under the trademark TEKSCAN.

The pressure mapping system generally comprises a mat 9 with an array of resistive elements 11, a data acquisition board 12 and pressure mapping software 14. The resistive elements 12 are correlated such that when a person sits on the mat, there will be a corresponding change in resistance in the resistive elements. The changes in resistance are then transferred to a personal computer via the data acquisition board 12. The pressure mapping software 14 then correlates the change in resistance to a pressure and graphically outputs the result as an array of pressure point values defining a pressure map. The output from the pressure mapping system is preferably in an ASCII format.

Pressure map data is collected for a number of persons, representing a sample of the driving population. That is, at least first and second arrays of differing data defining first and second pressure maps are measured. The pressure maps are stored as data in a storage memory device 16. Preferably, at least four samples, or pressure maps, are required. The four samples should be representative of a relatively high percentile of the driving population.

The next step, as indicated at 18 in the flow chart of Figure 1, is to normalize the data from each of the pressure maps to a common reference. In other words, the data of each of the pressure maps is normalized with a predetermined threshold data values of a reference pressure map. In the preferred embodiment, the H points of each data set are aligned. The pressure value for each corresponding cell is then statistically averaged, as indicated at 20, to generate a single "average" map, as indicated at 22.

The "average" map is then processed through a comfort analysis or prediction step, indicated at 24, and displayed as an output at 26. Specifically, the data from the averaged pressure map is compared to the data from the reference pressure map. The comfort analysis, or prediction, 24 is an iterative method to measure the "average" map in terms of total seat loading, that is, loading of delineated areas of the pressure map, such as right and left lateral regions, right and left trochanteric regions, right and left ischial regions and a sacral region. The data cells are scanned to determine whether any cell exceeds a predetermined threshold and flag such cells. Next, the data cells are processed for a determination of point pressures for ratioed results. The results are then rated based on total load, percent loading of specified delineated areas, percent point pressures and map gradient loading. Preferably, the output is in a format which can be read by a WINDOWS EXCEL macro for easy interpretation.

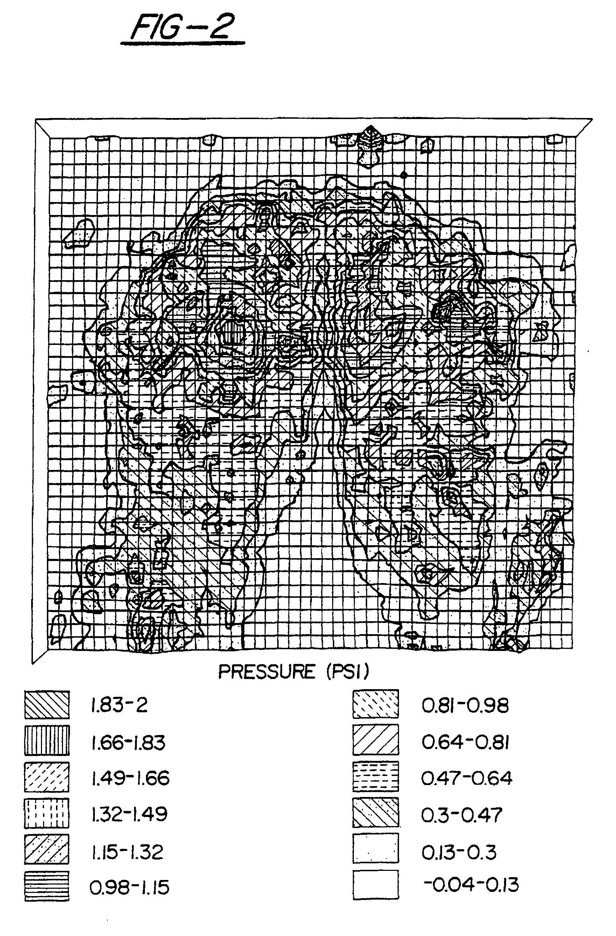

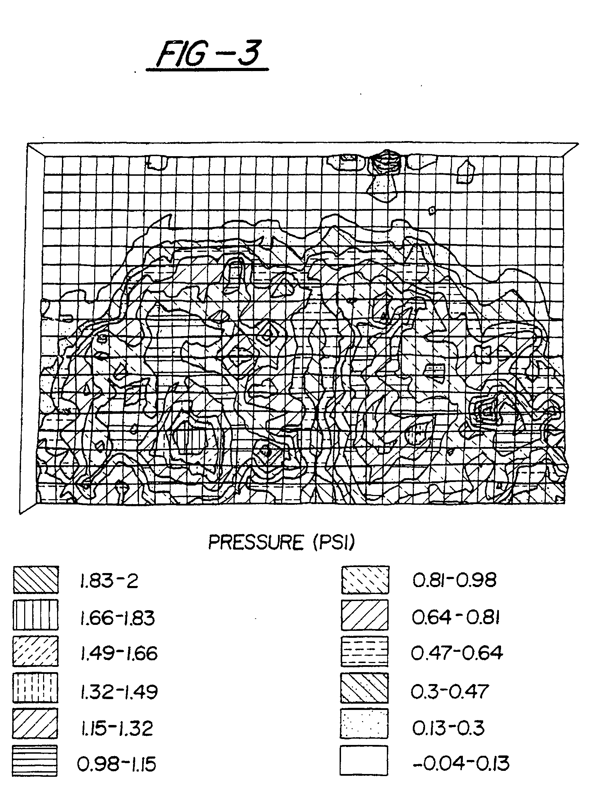

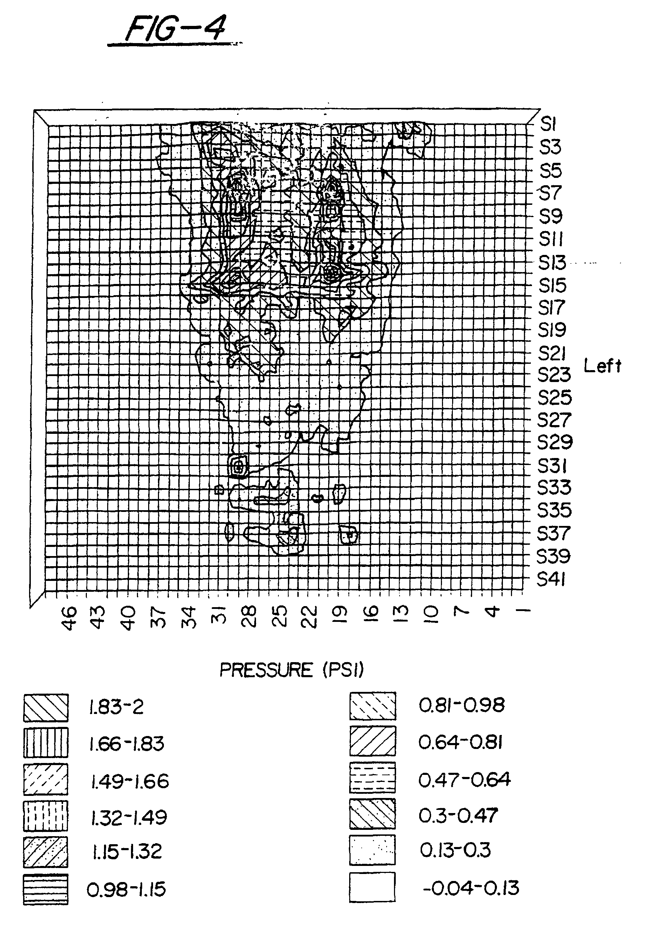

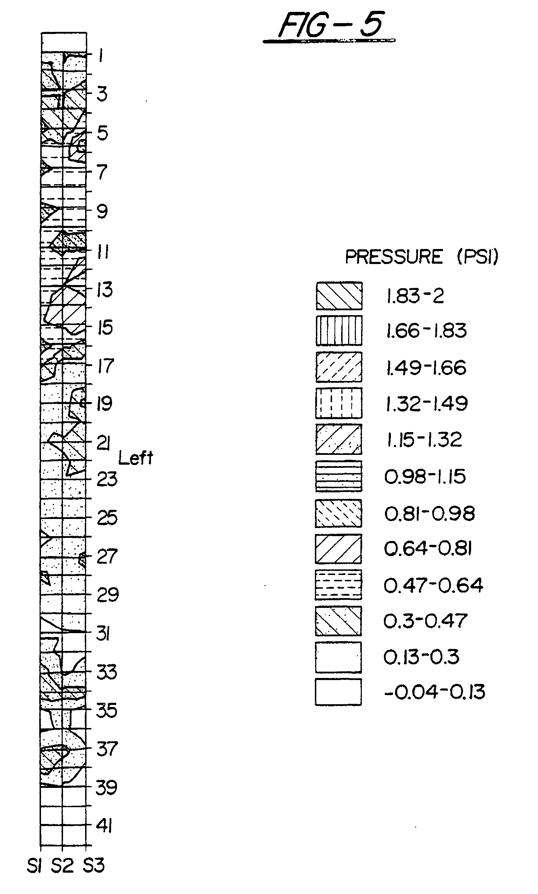

With reference to Figures 2-5, an example of the present invention is illustrated. In the present example, an automotive seat was selected having a seat back angle of 27°.

The following predetermined criteria for measurement was selected:

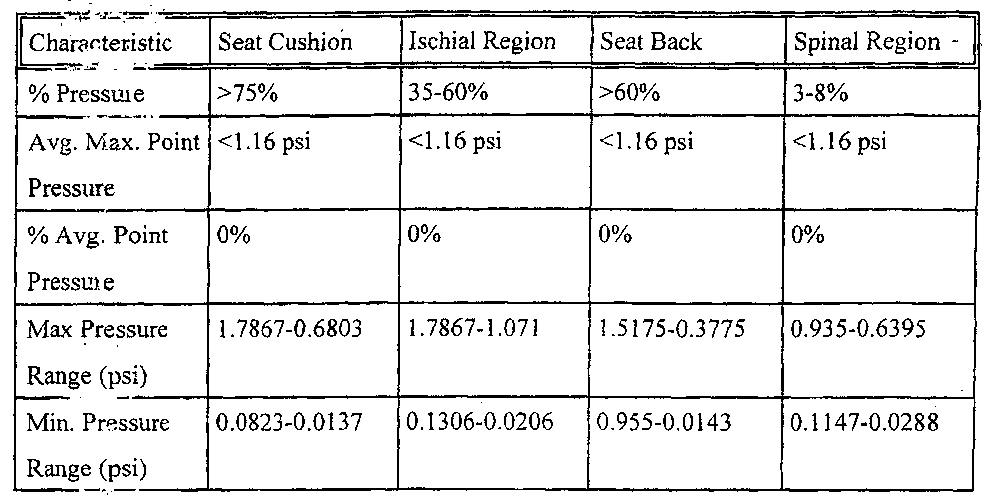

The observed and derived pressures are tabled as follows:

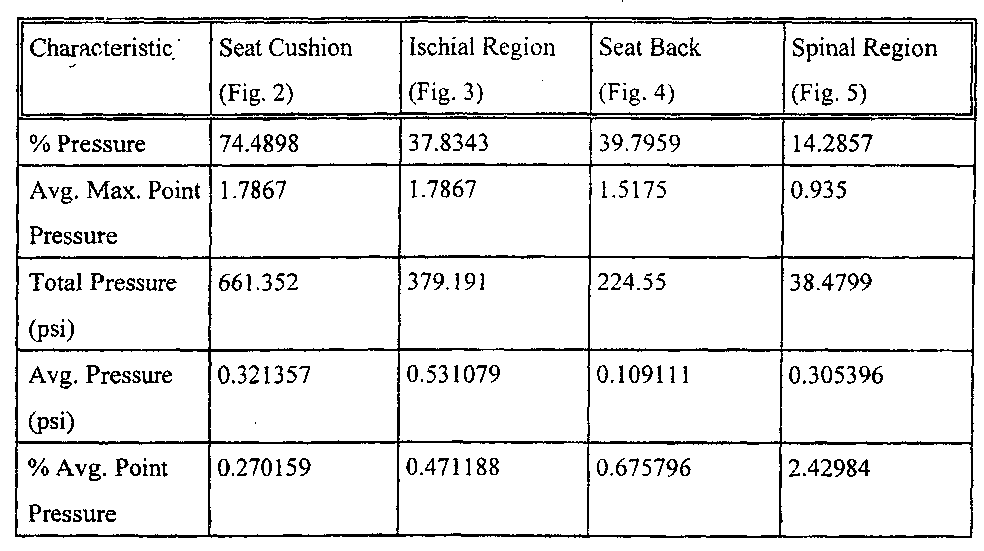

Based on the observed and derived results, the method 10 can then quantify seat comfort. The seat cushion in the present example obtained a four out of five (4/5) rating, while the seat back obtained a three out of five (3/5) rating to produced an average 3.5 rating. The seat cushion obtained a 4/5 rating because of its low "% Avg. Point Pressure". Calculations shown in the chart are based on sample population averages. Each sample has a "Maximum Point Pressure" for each region and a "Total Pressure" for each region, which are used to calculate the "% Point Pressure" for each region. The sum of the individual regional "% Point Pressure" divided by the number of samples in the population will give for each region, a population "% Avg. Point Pressure".

The rating analysis is based on the following criteria:
1. Points loads in excess of 1.16 psi are not acceptable;
2. Load distribution in the direction of height on the seat back yields load sharing from the seat cushion, which allows for a more forgiving seat cushion design by taking loads off of the ischial bones.
3. The necessity of lateral pressure is determined by the character of the seat rather than by the quality of the seat.
4. A comfortable seat should exhibit lumbar contact, but not along the spinal column.
5. Symmetry should be exhibited.
6. Pressure should be distributed.
7. Sacral pressures aid in supporting the unstable pelvis and stops it from rocking; as the pelvis rocks, the lower vertebrae respond by muscle contractions, which can lead to fatigue and lower back pain.
The factors can be weighted to provide a value representative of quantitative assessment of a seat. As is now apparent to those skilled in the art, other factors and weighing systems could be used, provided that the system is applied uniformly for making comparisons. This rating can be used to assess various designs of automotive seats on a quantitative basis.

The above-described embodiment of the invention is intended to be an example of the present invention and alterations and modifications may be affected thereto, by those of skill in the art, without departing from the scope of the invention. It is, therefore, to be understood that within the scope of the appended claims, the invention may be practice other than as specifically described.

## Claims

1. A method of mapping pressure on an automotive seat for prediction of seat comfort, said method comprising the steps of:
measuring a first array of pressure point values exerted on the seat defining a first pressure map;
measuring a second array of pressure point values exerted on the seat, different from the first array, defining a second pressure map;
storing the first and second pressure maps as data in a storage memory device;
normalizing the data with predetermined threshold values of a reference pressure map;
averaging the normalized data from each the pressure maps to generate data of a single averaged pressure map;
comparing the data from the averaged pressure map to the data from the reference pressure map; and
generating a rating of seat comfort based on the ratio difference between the data of the averaged pressure map and the data of the reference pressure map to thereby quantify the comfort of the seat.

2. The method as set forth in claim 1 further including generating a rating of seat comfort based on total pressure load of the averaged pressure map compared to the reference pressure map.

3. The method as set forth in claim 1 further including generating a rating of seat comfort based on percent loading of predetermined delineated area on the seat of the averaged pressure map compared to the reference pressure map.

4. The method as set forth in claim 1 further including generating a rating of seat comfort based on average pressure points of the averaged pressure map compared to the reference pressure map.

5. The method as set forth in claim 1 wherein said measuring of pressure point values includes placing a mat with an array of resistive elements on the seat, applying a force on the mat and measuring the change in resistance of the resistive elements in the mat.

6. The method as set forth in claim 5 wherein said measuring of pressure point values includes converting said change in resistance of the resistive elements to a pressure value.

## Patentansprüche

1. Verfahren zum Kartieren von auf einen Kraftfahrzeugsitz ausgeübtem Druck zur Vorhersage des Sitzkomforts, mit den folgenden Schritten:
Messen eines ersten Feldes von auf den Sitz ausgeübten Druckpunktwerten, das eine erste Druckkarte definiert,
Messen eines zweiten Feldes von auf den Sitz ausgeübten Druckpunktwerten, das sich von dem ersten Feld unterscheidet und eine zweite Druckkarte definiert,
Speichern der ersten und der zweiten Druckkarte als Daten in einer Massenspeichereinrichtung,
Normalisieren der Daten mit vorbestimmten Schwellwerten einer Referenzdruckkarte,
Mitteln der normalisierten Daten jeder Druckkarte, um Daten einer einzigen gemittelten Druckkarte zu erzeugen,
Vergleichen der Daten der gemittelten Druckkarte mit den Daten der Referenzdruckkarte und
Erzeugen einer Bewertung des Sitzkomforts basierend auf der Differenz der Verhältnisse zwischen den Daten der gemittelten Druckkarte und den Daten der Referenzdruckkarte, um dadurch den Komfort des Sitzes zu quantifizieren.

2. Verfahren nach Anspruch 1, das des weiteren den Schritt des Erzeugens einer Sitzkomfortbewertung basierend auf einer Gesamtdrucklast der gemittelten Druckkarte im Vergleich zu der Referenzdruckkarte umfaßt.

3. Verfahren nach Anspruch 1, das des weiteren den Schritt des Erzeugens einer Sitzkomfortbewertung basierend auf einer prozentualen Belastung in einem vorbestimmten skizzierten Bereich auf dem Sitz der gemittelten Druckkarte im Vergleich zu der Referenzdruckkarte umfaßt.

4. Verfahren nach Anspruch 1, das des weiteren den Schritt des Erzeugens einer Sitzkomfortbewertung basierend auf Durchschnittsdruckpunkten der gemittelten Druckkarte im Vergleich zu der Referenzdruckkarte umfaßt.

5. Verfahren nach Anspruch 1, in dem das Messen der Druckpunktwerte das Anbringen einer Matte mit einem Feld von Widerstandselementen auf dem Sitz, das Aufbringen einer Kraft auf die Matte und das Messen der Widerstandsänderung in den Widerstandselementen der Matte umfaßt.

6. Verfahren nach Anspruch 5, in dem das Messen von Druckpunktwerten das Konvertieren der Widerstandsänderung der Widerstandselemente in einen Druckwert umfaßt.

## Revendications

1. Procédé pour cartographier la pression sur un siège d'automobile pour prédire le confort du siège, ledit procédé comprenant les étapes consistant à:
mesurer un premier réseau de valeurs ponctuelles de pression exercées sur le siège définissant une première carte de pression;
mesurer un deuxième réseau de valeurs ponctuelle de pression exercées sur le siège, différent du premier réseau, définissant une deuxième carte de pression;
stocker la première et la deuxième carte de pression sous forme de données dans un dispositif à mémoire de stockage;
normaliser les données avec des valeurs de seuil prédéterminées d'une carte de pression de référence;
moyenner les données normalisées provenant de chacune des cartes de pression pour engendrer des données d'une unique carte de pression moyennée;
comparer les données provenant de la carte de pression moyennée et les données provenant de la carte de pression de référence; et
engendrer une notation de confort du siège en se basant sur la différence des rapports entre les données de la carte de pression moyennée et les données de la carte de pression de référence pour ainsi quantifier le confort du siège.

2. Procédé selon la revendication 1, incluant en outre l'opération consistant à générer une notation du confort du siège en se basant sur la charge de pression totale de la carte de pression moyennée par comparaison à la carte de pression de référence.

3. Procédé selon la revendication 1, incluant en outre l'opération consistant à générer une notation du confort du siège en se basant sur un pourcentage de charge d'une zone décrite prédéterminée sur le siège de la carte de pression moyennée par comparaison à la carte de pression de référence.

4. Procédé selon la revendication 1, incluant en outre l'opération consistant à générer une notation du confort du siège en se basant sur des points de pression moyennés de la carte de pression moyennée par comparaison à la carte de pression de référence.

5. Procédé selon la revendication 1, dans lequel ladite mesure de valeurs ponctuelles de pression inclut l'opération consistant à placer un mat avec un réseau d'éléments résistifs sur le siège, à appliquer une force sur le mat et à mesurer le changement de résistance des éléments résistifs dans le mat.

6. Procédé selon la revendication 5, dans lequel ladite mesure de valeurs ponctuelles de pression inclut l'opération consistant à convertir ledit changement de résistance des éléments résistifs en une valeur de pression.
